# EUROPEAN PATENT APPLICATION

(11) **EP 2 523 521 A1**
(43) Date of publication of application: **14.11.2012**
(21) Application number: 10842251.0
(22) Date of filing: 29.12.2010
(51) Int. Cl.: H04W 74/02, H04W 72/04, H04W 72/12, H04W 72/14

(54) **WIRELESS COMMUNICATION SYSTEM, BASE STATION APPARATUS, MOBILE STATION APPARATUS, WIRELESS COMMUNICATION METHOD AND CIRCUIT DEVICE**

(30) Priority: 08.01.2010 JP 2010002555
(71) Applicant: Sharp Kabushiki Kaisha, Osaka-shi, Osaka 545-8522 (JP)
(72) Inventor: SUZUKI, Shoichi, Osaka-shi, Osaka 545-8522 (JP); KATO, Yasuyuki, Osaka-shi, Osaka 545-8522 (JP); NAKASHIMA, Daiichiro, Osaka-shi, Osaka 545-8522 (JP); YAMADA, Shohei, Osaka-shi, Osaka 545-8522 (JP)
(74) Representative: Müller - Hoffmann & Partner
(86) International application number: PCT/JP2010/073832
(87) International publication number: WO 2011/083740

(57) **Abstract**

Contention based uplink transmission is efficiently performed. A scheduling unit (2013) selects, when uplink grant includes C-RNTI allocated to its device, the whole of radio resources indicated by this uplink grant. When uplink grant includes CB-RNTI, the scheduling unit (2013) randomly selects one radio resource from multiple radio resources indicated by this uplink grant. The scheduling unit (2013) generates control information for controlling a transmission unit (207) so that PUSCH is multiplexed on the selected radio resource, and outputs it to a control unit (203). When blind decoding of multiple uplink grants including CB-RNTI has successfully been performed, the scheduling unit (2013) randomly selects one radio resource from the whole of multiple radio resources indicated by multiple uplink grants. The scheduling unit (2013) generates control information for controlling the transmission unit (207) so that PUSCH is multiplexed on the selected radio resource, and outputs it to the control unit (203).

## Description

### TECHNICAL FIELD

The present invention relates to a radio communication system in which a mobile station device transmits data (signal) to a base station device based on control information received from the base station device, and to the base station device and the mobile station device, as well as a radio communication method and a circuit device.

### BACKGROUND ART

Evolution of the radio access scheme and the radio network for cellular mobile communication (hereinafter referred to as "Long Term Evolution (LTE)" or "Evolved Universal Terrestrial Radio Access (EUTRA)") has been studied by the 3rd Generation Partnership Project (3GPP). According to LTE, as a communication scheme for radio communication from a base station device to a mobile station device (downlink), the Orthogonal Frequency Division Multiplexing (OFDM) scheme which is a multicarrier transmission scheme is used. As a communication scheme for radio communication from a mobile station device to the base station device (uplink), the SC-FDMA (Single-Carrier Frequency Division Multiple Access) scheme which is a single-carrier transmission scheme is used.

According to LTE, the base station device determines radio resource allocation, code rate, and modulation scheme for example, for a PUSCH (Physical Uplink Shared Channel) which is a channel for transmitting data by a mobile station device. The base station device also transmits downlink control information (DCI) indicating information such as the radio resource allocation to the mobile station device using a PDCCH (Physical Downlink Control Channel).

The 3GPP has also studied a radio access scheme and a radio network that use a broader frequency band than LTE to implement still faster data communication (hereinafter referred to as "Long Term Evolution-Advanced (LTE-A)" or "Advanced Evolved Universal Terrestrial Radio Access (A-EUTRA)"). LTE-A requires backward compatibility with LTE, namely requires that a base station device of LTE-A should communicate by radio with both a mobile station device of LTE-A and a mobile station device of LTE simultaneously, and a mobile station device of LTE-A should be able to communicate by radio with both the base station device of LTE-A and the base station device of LTE. LTE-A has studied use of the same channel structure as that of LTE.

"Contention based uplink transmissions" (NPL 1) proposes to introduce contention based uplink transmission in order to improve the latency and the overhead in LTE-A. In contention based uplink transmission, a base station device transmits downlink control information that includes PUSCH radio resource allocation for example and can be received by a plurality of mobile station devices. A mobile station device detects the downlink control information and transmits the PUSCH based on the downlink control information. In the case of contention based uplink transmission, a plurality of mobile station devices may detect the same downlink control information. As a result, a plurality of mobile station devices use the same radio resource to transmit respective PUSCHs and thus respective PUSCHs from these mobile station devices collide with each other.

The contention based uplink transmission using the PUSCH is different from random access using a random access channel (Physical Random Access Channel: PRACH). The contention based uplink transmission and the random access are identical in terms of the possibility of contention (collision). They are different from each other in that a radio resource used for preamble transmission by the random access is the PRACH indicated by system information broadcasted by the base station device, while a radio resource used by the contention based uplink transmission is the PUSCH scheduled by the PDCCH.

For transmission of message 3 in the random access process, the PUSCH is used. After transmitting the preamble via the PRACH, the mobile station device transmits uplink data using a PUSCH radio resource scheduled by a random access response (message 2) while the possibility of collision still remains. In contrast, as for the contention based uplink transmission, preamble transmission via the PRACH is not performed, the base station device uses the PDCCH to schedule the PUSCH radio resource having the possibility of collision, and the mobile station device transmits uplink data using the scheduled PUSCH radio resource. Namely, the contention based uplink transmission does not involve the random access process.

According to LTE, basically access is made using a scheduling request (SR). The mobile station device uses an uplink control channel (Physical Uplink Control Channel: PUCCH) or PRACH to request a PUSCH radio resource for transmitting uplink data. In contrast, regarding the contention based uplink transmission, the mobile station device does not make the scheduling request but can directly transmit uplink data, and therefore, the latency is improved as compared with the access method using the scheduling request. Unlike the PRACH, the PUSCH has no guard time. Therefore, only a mobile station device with effective uplink timing adjustment (Time Alignment) can access the base station device through contention based uplink transmission. The period for which the uplink timing adjustment is effective is a certain period (including infinity) from reception of uplink timing information (Timing Advance Command).

### CITATION LIST

### NON PATENT LITERATURE

NPL 1: "Contention based uplink transmissions," 3GPP TSG RAN WG2 Meeting #66bis, R2-093812, June 29 to July 03, 2009

### SUMMARY OF INVENTION

### TECHNICAL PROBLEM

Regarding the conventional contention based uplink transmission, however, only one PUSCH radio resource can be allocated by a piece of downlink control information, and a resultant problem is that contention based uplink transmission cannot efficiently be performed.

The present invention has been made in view of the problem above, and an object of the invention is to provide a radio communication system, a base station device, a mobile station device, a radio communication method, and a circuit device by which contention based uplink transmission can efficiently be performed.

### SOLUTION TO PROBLEM

(1) According to an aspect of the present invention, a radio communication system includes a base station device and a mobile station device transmitting a signal to the base station device based on control information received from the base station device. The base station device transmits, on a control channel, control information indicating a plurality of radio resources for contention based signal transmission. The mobile station device receives the control information on the control channel. The mobile station device selects one radio resource from the plurality of radio resources indicated by the control information. The mobile station device transmits a contention based signal using the selected radio resource.
(2) Preferably, in the radio communication system of the present invention, when the mobile station device detects a plurality of pieces of the control information in the same time frame, the mobile station device selects one radio resource from the whole of a plurality of radio resources indicated by a plurality of pieces of the control information each indicating a plurality of radio resources.
(3) Preferably, in the radio communication system of the present invention, the mobile station device randomly selects the one radio resource.
(4) Preferably, in the radio communication system of the present invention, the base station device includes, in control information indicating a plurality of radio resources for contention based signal transmission, a first identifier common to different mobile station devices. The base station device includes, in control information indicating one or more radio resources for signal transmission assigned to a specific mobile station device, a second identifier allocated to the specific mobile station device. The mobile station device changes a way to select the radio resource for signal transmission depending on whether the control information includes the first identifier or the second identifier.
(5) Preferably, in the radio communication system of the present invention, when the control information includes the first identifier, the mobile station device selects one radio resource from the plurality of radio resources for signal transmission that are indicated by the control information. When the control information includes the second identifier, the mobile station device selects all the plurality of radio resources for signal transmission that are indicated by the control information.
(6) Preferably, in the radio communication system of the present invention, a radio resource for signal transmission indicated by the control information is indicated by an assigned number of a physical resource block pair of a lowest frequency among physical resource block pairs that are consecutive in a frequency domain and the number of the physical resource block pairs that are consecutive in ascending order of frequency from the physical resource block pair of the lowest frequency. When the control information includes the first identifier, the mobile station device determines that radio resources for signal transmission are each constituted of a specific number of consecutive physical resource block pairs, beginning from a physical resource block pair of a lowest frequency among a plurality of physical resource block pairs indicated by said control information, and selects one radio resource from the radio resources for signal transmission. When the control information includes the second identifier, the mobile station device determines that a whole of a plurality of physical resource block pairs indicated by the control information constitute one radio resource for signal transmission, and selects the radio resource for signal transmission.
(7) According to another aspect of the present invention, a base station device receives a signal transmitted from a mobile station device based on control information transmitted from the base station device. The base station device includes: a transmission unit transmitting, on a control channel, control information indicating a plurality of radio resources for contention based signal transmission; and a reception unit receiving a signal from an unspecified mobile station device using the radio resources each.
(8) According to still another aspect of the present invention, a mobile station device transmits a signal to a base station device based on control information transmitted from the base station device. The mobile station device includes: a reception unit receiving, on a control channel, control information indicating a plurality of radio resources for contention based signal transmission that is transmitted from the base station device; a scheduling unit selecting one radio resource from the plurality of radio resources indicated by the control information; and a transmission unit transmitting a contention based signal using the selected radio resource.
(9) According to a further aspect of the present invention, a radio communication method is applied to a base station device receiving a signal transmitted from a mobile station device based on control information transmitted from the base station device. The radio communication method includes the steps of: transmitting, on a control channel, control information indicating a plurality of radio resources for contention based signal transmission; and receiving a signal from an unspecified mobile station device using the radio resources each.
(10) According to a further aspect of the present invention, a radio communication method is applied to a mobile station device transmitting a signal to a base station device based on control information transmitted from the base station device. The radio communication method includes the steps of: receiving, on a control channel, control information indicating a plurality of radio resources for contention based signal transmission that is transmitted from the base station device; selecting one radio resource from the plurality of radio resources indicated by the control information; and transmitting a contention based signal using the selected radio resource.
(11) According to a further aspect of the present invention, a circuit device in a base station device receiving a signal transmitted from a mobile station device based on control information transmitted from the base station device includes: a transmission circuit transmitting, on a control channel, control information indicating a plurality of radio resources for contention based signal transmission; and a reception circuit receiving a signal from an unspecified mobile station device using the radio resources each.
(12) Preferably, the circuit device is an integrated circuit into which the transmission circuit and the reception circuit are integrated.
(13) According to a further aspect of the present invention, a circuit device in a mobile station device transmitting a signal to a base station device based on control information transmitted from the base station device includes: a reception circuit receiving, on a control channel, control information indicating a plurality of radio resources for contention based signal transmission that is transmitted from the base station device; a selection circuit selecting one radio resource from the plurality of radio resources indicated by the control information; and a transmission circuit transmitting a contention based signal using the selected radio resource.
(14) Preferably, the circuit device is an integrated circuit into which the reception circuit, the selection circuit, and the transmission circuit are integrated.

### ADVANTAGEOUS EFFECTS OF INVENTION

In accordance with the present invention, contention based uplink transmission can efficiently be performed.

### BRIEF DESCRIPTION OF DRAWINGS

Fig. 1 is a conceptual diagram of a radio communication system according to the present invention.
Fig. 2 is a schematic diagram illustrating an example configuration of a downlink radio frame according to the present invention.
Fig. 3 is a schematic diagram illustrating an example configuration of an uplink radio frame according to the present invention.
Fig. 4 is a schematic diagram illustrating an example of the way to allocate uplink radio resources according to the present invention.
Fig. 5 is a sequence chart illustrating an example of contention based uplink transmission according to the present invention.
Fig. 6 is a diagram illustrating an example of radio resource allocation for contention based uplink transmission according to the present invention.
Fig. 7 is a schematic block diagram illustrating a configuration of a base station device 3 according to the present invention.
Fig. 8 is a schematic block diagram illustrating a configuration of a mobile station device 1 according to the present invention.
Fig. 9 is a flowchart illustrating an example operation of base station device 3 according to the present invention.
Fig. 10 is a flowchart illustrating an example operation of mobile station device 1 according to the present invention.
Fig. 11 is a diagram illustrating an example of radio resource allocation for contention based uplink transmission according to a modification of the present invention.

### DESCRIPTION OF EMBODIMENTS

An embodiment of the present invention will hereinafter be described in detail with reference to the drawings.

### <As to Radio Communication System>

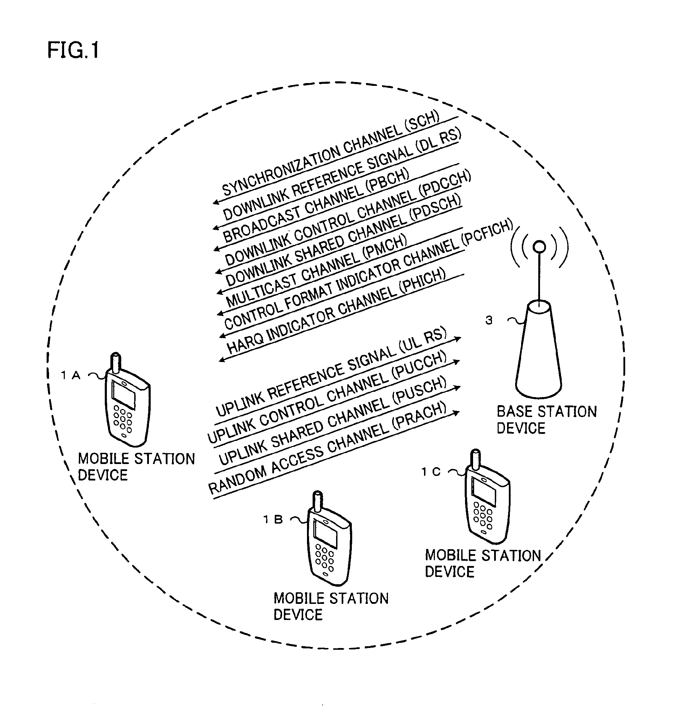

Fig. 1 is a conceptual diagram of a radio communication system according to the present invention. In Fig. 1, the radio communication system includes mobile station devices 1A to 1C and a base station device 3. Fig. 1 illustrates radio communication from base station device 3 to mobile station devices 1A to 1C (downlink) for which a synchronization channel (SCH), a downlink pilot channel (which may alternatively be referred to as "Downlink Reference Signal (DL RS)"), a broadcast channel (Physical Broadcast Channel: PBCH), a downlink control channel (Physical Downlink Control Channel: PDCCH), a downlink shared channel (Physical Downlink Shared Channel: PDSCH), a multicast channel (Physical Multicast Channel: PMCH), a control format indicator channel (Physical Control Format Indicator Channel: PCFICH), and an HARQ indicator channel (Physical Hybrid ARQ Indicator Channel: PHICH) are allocated.

Fig. 1 also illustrates radio communication from mobile station devices 1A to 1C to base station device 3 (uplink) for which an uplink pilot channel (which may alternatively be referred to as "Uplink Reference Signal: UL RS"), an uplink control channel (Physical Uplink Control Channel: PUCCH), an uplink shared channel (Physical Uplink Shared Channel: PUSCH), and a random access channel (Physical Random Access Channel: PRACH) are allocated. In the following, mobile station devices 1A to 1C will be referred to as mobile station device 1.

### <As to Downlink Radio Frame>

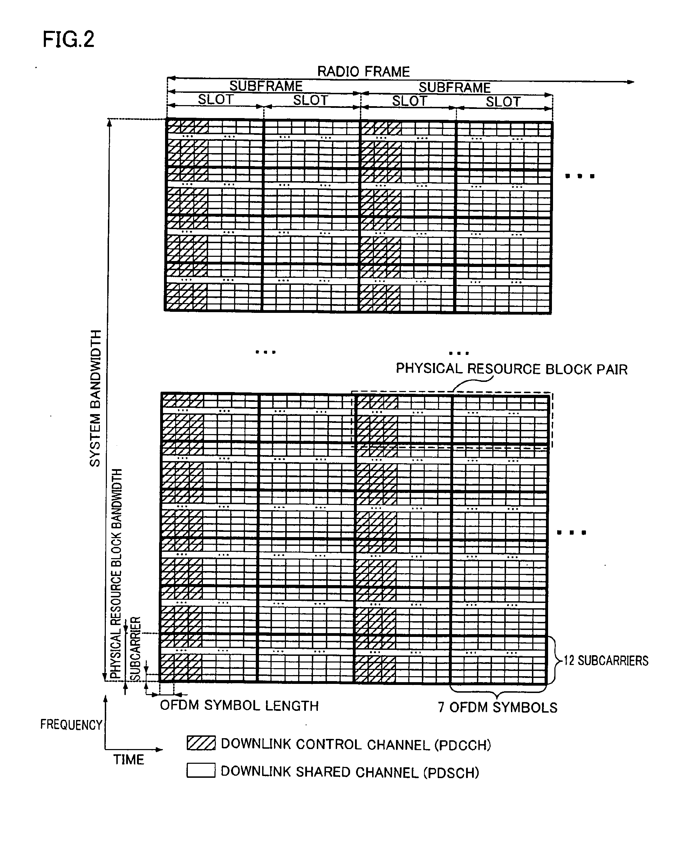

Fig. 2 is a schematic diagram illustrating an example configuration of a downlink radio frame according to the present invention. In Fig. 2, the horizontal axis represents the time domain and the vertical axis represents the frequency domain. As shown in Fig. 2, the downlink radio frame is made up of a plurality of downlink physical resource block (PRB) pairs (a physical resource block pair is a region for example enclosed by the broken line in Fig. 2). The downlink physical resource block pair is a unit for radio resource allocation for example and consists of a frequency band of a predetermined width (PRB bandwidth: 180 kHz) and a time length (two slots = one subframe (time frame): 1 ms).

One downlink physical resource block pair consists of two downlink physical resource blocks (PRB bandwidth x slots) that are consecutive in the time domain. One downlink physical resource block (the unit enclosed by the bold line in Fig. 2) consists of 12 subcarriers (15 kHz) in the frequency domain and seven OFDM symbols (71 µs) in the time domain. In the time domain, a slot (0.5 ms) consists of seven OFDM (Orthogonal Frequency Division Multiplexing) symbols, a subframe (1 ms) consists of two slots, and a radio frame (10 ms) consists of 10 subframes. In the frequency domain, a plurality of downlink physical resource blocks are mapped depending on the downlink bandwidth. Here, a unit consisting of a single subcarrier and a single OFDM symbol will be referred to as "downlink resource element."

In the following, channels allocated in the downlink radio frame will be described. In each downlink subframe, PDCCH, PDSCH, and downlink reference signal for example are allocated. A description will be given first of the PDCCH. The PDCCH is mapped to a region starting from the first OFDM symbol in the subframe (the region hatched with left oblique lines in Fig. 2). The number of the OFDM symbols to which the PDCCH is mapped is one to three and is different from subframe to subframe. To the PDCCH, a signal of downlink control information (DCI) is mapped which is information including an information format such as downlink assignment (referred to also as downlink grant) and uplink grant and used for controlling communication.

The downlink assignment includes information such as information indicating a modulation scheme for the PDSCH, information indicating a coding scheme, information indicating radio resource allocation, information about HARQ (Hybrid Automatic Repeat Request), and TPC command, for example. The uplink grant includes information such as information indicating a modulation scheme for the PUSCH, information indicating a coding scheme, information indicating radio resource allocation, information about HARQ, and TPC command, for example. HARQ refers to a technology as follows. Specifically, in the case for example where mobile station device 1 (base station device 3) transmits to base station device 3 (mobile station device 1) whether or not data information has been decoded successfully (Acknowledgement/Negative Acknowledgement: ACK/NACK) and mobile station device 1 (base station device 3) cannot decode the data information due to an error (NACK), the base station device 3 (mobile station device 1) retransmits the signal and mobile station device 1 (base station device 3) decodes a synthesized signal of the re-received signal and the signal having already been received.

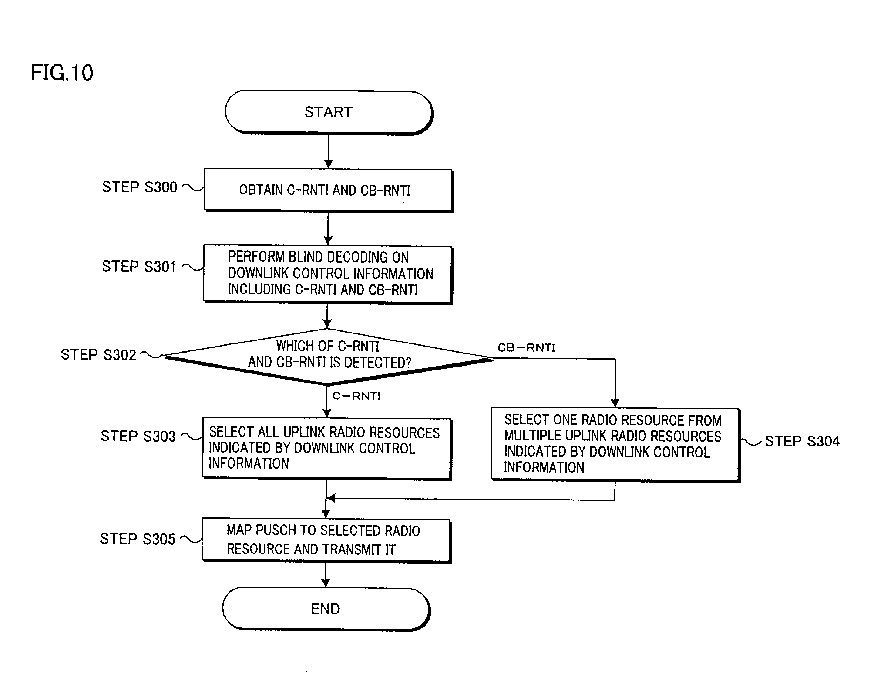

A description will be given next of the PDSCH. The PDSCH is mapped to OFDM symbols (the non-hatched region in Fig. 2) other than the OFDM symbols to which the PDCCH is mapped in the subframe. To the PDSCH, a signal of data information (transport block) is mapped. PDSCH radio resources are allocated by the downlink assignment and mapped to the same downlink subframe as the PDCCH including this downlink assignment. While the downlink reference signal is not shown in Fig. 10 for the sake of simplicity of description, the downlink reference signal is mapped so that it is distributed in the frequency domain and the time domain.

### <As to PDCCH>

In the following, the PDCCH will be described in more detail. The PDCCH is mapped to one or a plurality of control channel elements (CCE). The control channel element is made up of a plurality of downlink resource elements distributed in the frequency domain and the time domain within the region where the PDCCH is mapped (the region hatched with the left oblique lines in Fig. 2). A plurality of control channel elements form a common search space and a mobile station device (user equipment)-specific search space each.

The common search space is a space which is shared by a plurality of mobile station devices 1 and to which the PDCCH for a plurality of mobile station devices 1 and/or the PDCCH for a specific mobile station device 1 is mapped. The common search space consists of predetermined control channel elements. The mobile-station-device-specific search space is a space to which the PDCCH for a specific mobile station device 1 is mapped and which is formed for each mobile station device 1. Different common search spaces and mobile-station-device-specific search spaces are formed depending on the number of control channel elements where the PDCCH is mapped (control channel elements forming a candidate to which the PDCCH is mapped (hereinafter referred to as "PDCCH candidate")). For example, for a PDCCH candidate consisting of four control channel elements and a PDCCH candidate consisting of eight control channel elements, two common search spaces are provided. For a PDCCH candidate consisting of one control channel element, a PDCCH candidate consisting of two control channel elements, a PDCCH candidate consisting of four control channel elements, and a PDCCH candidate consisting of eight control channel elements, four mobile-station-device-specific search spaces are provided. The common search spaces and the mobile-station-device-specific search spaces may partially or wholly overlap each other, different common search spaces may partially or wholly overlap each other, different mobile-station-device-specific search spaces for the same mobile station device 1 may partially or wholly overlap each other, or mobile-station-device-specific search spaces for different mobile station devices 1 may partially or wholly overlap each other.

For the downlink control information such as downlink assignment and uplink grant, a plurality of formats are prepared. The format for the downlink control information is called DCI format. For example, as the DCI formats for uplink grant, DCI format 0 used in the case where mobile station device 1 transmits the PUSCH using one transmission antenna port, and DCI format 0A used in the case where mobile station device 1 transmits the PUSCH using MIMO (Multiple Input Multiple Output) SM (Spatial Multiplexing) are prepared. As the DCI formats for downlink grant, DCI format 1 and DCI format 1A used in the case where base station device 3 transmits the PDSCH using one transmission antenna port or a plurality of transmission antenna ports by means of the transmission diversity scheme, and DCI format 2 used in the case where the base station device transmits the PDSCH by means of the MIMO SM are prepared. There are DCI formats with the same number of bits and DCI formats with different numbers of bits.

Base station device 3 attaches, to the downlink control information, a sequence that is generated by scrambling, with an RNTI (Radio Network Temporary Identifier), a cyclic redundancy check (CRC) code generated based on the downlink control information. Mobile station device 1 changes interpretation of the downlink control information depending on which RNTI is used to scramble the cyclic redundancy check code. For example, mobile station device 1 determines that, in the case where the cyclic redundancy check code is scrambled with a C-RNTI (Cell-Radio Network Temporary Identifier) (second identifier) allocated by base station device 3 to the mobile station device, the downlink control information indicates a radio resource for the mobile station device. In the case where the cyclic redundancy check code is scrambled with a CB-RNTI (Contention Based-Radio Network Temporary Identifier) (first identifier) allocated by base station device 3 to the mobile station device or broadcasted by base station device 3, mobile station device 1 determines that the downlink control information indicates a radio resource for contention based uplink transmission. In the following, the fact that the cyclic redundancy check code scrambled with the RNTI is attached to the downlink control information will be described simply as that the downlink control information includes the RNTI or the PDCCH includes the RNTI.

Base station device 3 codes the downlink control information in accordance with the number of bits of control channel elements, and maps it to the common search space or mobile-station-device-specific search space. Base station device 3 codes in the same manner the DCI formats with the same number of bits, and codes in different manners the DCI formats with respective numbers of bits different from each other. Namely, depending on the number of bits of the DCI format, the coding scheme applied by base station device 3 to the DCI format varies, and therefore, depending on the number of bits of the DCI format, the way to decode the DCI format by mobile station device 1 varies as well. Thus, mobile station device 1 can identify the type of the DCI format based on the difference in the number of bits of the DCI format or the difference in the way to decode it. In the case where DCI formats have the same number of bits, the DCI formats may include information for identifying the type of the DCI formats, or the method that attaches the cyclic redundancy check code scrambled with the RNTI appropriate for the type of the DCI format may be used, so as to enable mobile station device 1 to identify the type of the DCI format.

Mobile station device 1 decodes all candidates where the PDCCH is mapped in the common search space and the mobile-station-device-specific search space, descrambles the sequence generated by scrambling the cyclic redundancy check code with the RNTI, further with the RNTI and, when no error is detected in the descrambled cyclic redundancy check code, it determines that the PDCCH has successfully been obtained. This process is called blind decoding.

In the case where the downlink control information indicates a radio resource for contention based uplink transmission, base station device 3 includes the CB-RNTI in DCI format 0 and/or DCI format 0A, or base station device 3 includes the CB-RNTI in DCI format 0B having the same number of bits as DCI format 0 or DCI format 0A. Mobile station device 1 determines from the RNTI included in the downlink control information whether the downlink control information indicates a radio resource for a specific mobile station device 1 or a radio resource for contention based uplink transmission, to thereby eliminate the need of mobile station device 1 of performing blind decoding in different manners for the downlink control information indicating a radio resource for a specific mobile station device 1 and the downlink control information indicating a radio resource for contention based uplink transmission. In this way, the load of the blind decoding on mobile station device 1 can be reduced.

Base station device 3 maps the PDCCH including the C-RNTI to the common search space or the mobile-station-device-specific search space for mobile station device 1 to which the C-RNTI is allocated, and mobile station device 1 performs blind decoding of the PDCCH including the C-RNTI in the common search space and the mobile-station-device-specific search space. Base station device 3 maps the PDCCH including a P-RNTI (Paging-Radio Network Temporary Identifier) used for scheduling paging information and update information for the system information, the PDCCH including an SI-RNTI (System Information-Radio Network Temporary Identifier) used for scheduling the system information, and the PDCCH including an RA-RNTI (Random Access-Radio Network Temporary Identifier) used for scheduling random access response to the common search space, and mobile station device 1 performs blind decoding of the PDCCH including the P-RNTI, the PDCCH including the SI-RNTI, and the PDCCH including the RA-RNTI in the common search space.

Base station device 3 maps the PDCCH including the CB-RNTI to the common search space and mobile station device 1 performs blind decoding of the PDCCH including the CB-RNTI in the common search space. Thus, the PDCCH including the CB-RNTI is mapped to the common search space so that equal opportunities can be given of detecting the PDCCH including the CB-RNTI by a plurality of mobile station devices 1 communicating by radio with base station device 3.

Base station device 3 may map the PDCCH including the CB-RNTI to the common search space or mobile-station-device-specific search space, and mobile station device 1 may perform blind decoding of the PDCCH including the CB-RNTI in the common search space and the mobile-station-device-specific search space. In the case where base station device 3 maps the PDCCH including the CB-RNTI to the mobile-station-device-specific search space, it may map the PDCCH to a region where mobile-station-device-specific search spaces for a plurality of mobile station devices 1 overlap each other. Accordingly, even when the PDCCH including the CB-RNTI is mapped to the mobile-station-device-specific search space, a plurality of mobile station devices 1 can detect the PDCCH including the CB-RNTI. Thus, the PDCCH including the CB-RNTI is mapped to the common search space or mobile-station-device-specific search space to increase the degree of freedom in mapping the PDCCH including the CB-RNTI.

Mobile station device 1 to which an uplink radio resource is allocated appropriately by base station device 3 may transmit the PUSCH to base station device 3 using the radio resource allocated thereto, without performing contention based uplink transmission. Thus, a higher layer of mobile station device 1 of the present invention instructs its physical layer (reception unit) to perform blind decoding of the PDCCH including the CB-RNTI in the case where an uplink radio resource is not allocated in spite of the fact that there is data information to be uplink transmitted. The physical layer of mobile station device 1 performs blind decoding of the PDCCH including the CB-RNTI only in the case where the physical layer of mobile station device 1 is instructed by the higher layer thereof to do so. Thus, mobile station device 1 performs blind decoding of the PDCCH including the CB-RNTI only when required. Therefore, blind decoding of the PDCCH including the CB-RNTI can efficiently be performed. In order to lower the probability of collision between contention based uplink transmissions, a subframe on which blind decoding of the PDCCH including the CB-RNTI is performed for each mobile station device 1 may for example be limited to the even-number or odd-number subframe.

### <As to Uplink Radio Frame>

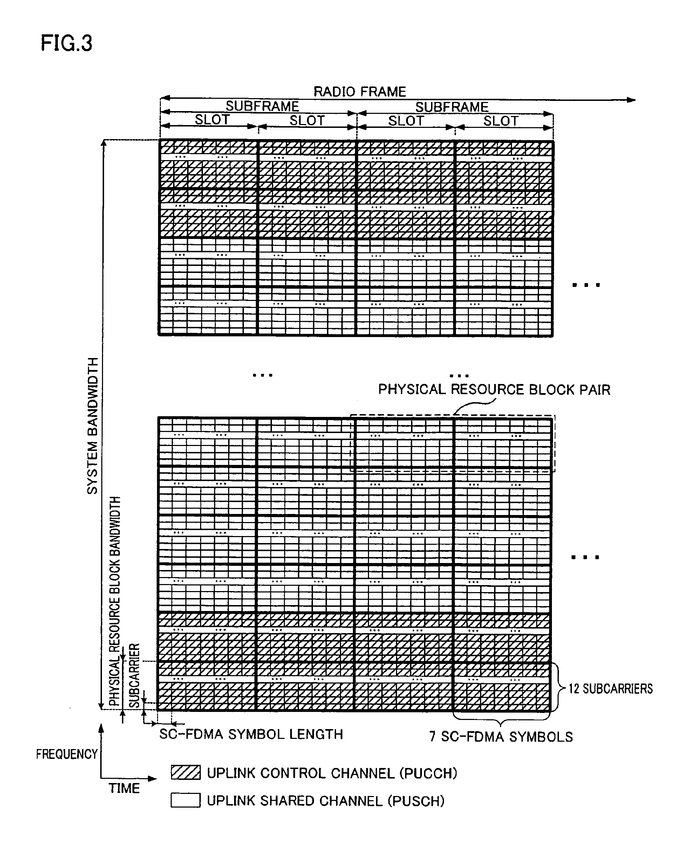

Fig. 3 is a schematic diagram illustrating an example configuration of an uplink radio frame according to the present invention. In Fig. 3, the horizontal axis represents the time domain and the vertical axis represents the frequency domain. As shown in Fig. 3, the uplink radio frame is made up of a plurality of uplink physical resource block pairs (a physical resource block pair is the region enclosed by the broken line in Fig. 3). The uplink physical resource block pair is a unit for radio resource allocation for example and consists of a frequency band of a predetermined width (PRB bandwidth: 180 kHz) and a time length (two slots = one subframe: 1 ms).

One uplink physical resource block pair consists of two uplink physical resource blocks (PRB bandwidth x slots) that are consecutive in the time domain. One uplink physical resource block (the units each enclosed by the bold line in Fig. 3) consists of 12 subcarriers (15 kHz) in the frequency domain and seven SC-FDMA (Single-Carrier Frequency Division Multiple Access) symbols (71 µs) in the time domain. In the time domain, a slot (0.5 ms) consists of seven SC-FDMA symbols, a subframe (1 ms) consists of two slots, and a radio frame (10 ms) consists of 10 subframes. In the frequency domain, a plurality of uplink physical resource blocks are mapped depending on the uplink bandwidth. Here, a unit consisting of a single subcarrier and a single SC-FDMA symbol will be referred to as "uplink resource element."

In the following, channels allocated in the uplink radio frame will be described. In each uplink subframe, PUCCH, PUSCH, and uplink reference signal for example are allocated. A description will be given first of the PUCCH. The PUCCH is allocated to uplink physical resource block pairs located on the opposite ends of the uplink bandwidth (the region hatched with left oblique lines in Fig. 3). To the PUCCH, a signal of uplink control information (UCI) is mapped which is information used for controlling communication, such as channel quality information (CQI) indicating downlink channel quality, scheduling request (SR) indicating a request for uplink radio resource allocation, and ACK/NACK which is a response concerning receipt of the PDSCH.

A description will be given next of the PUSCH. The PUSCH is allocated to uplink physical resource block pairs (the non-hatched region in Fig. 3) other than the uplink physical resource blocks where the PUCCH is mapped. To the PUSCH, a signal of uplink control information and/or data information (transport block) which is information other than the uplink control information is mapped. The PUSCH radio resource is allocated by means of uplink grant, and mapped to an uplink subframe appearing a predetermined time after a downlink subframe by which the PDCCH including the uplink grant is received by mobile station device 1 (for example, an uplink subframe appearing four subframes after the downlink subframe by which the PDCCH is received).

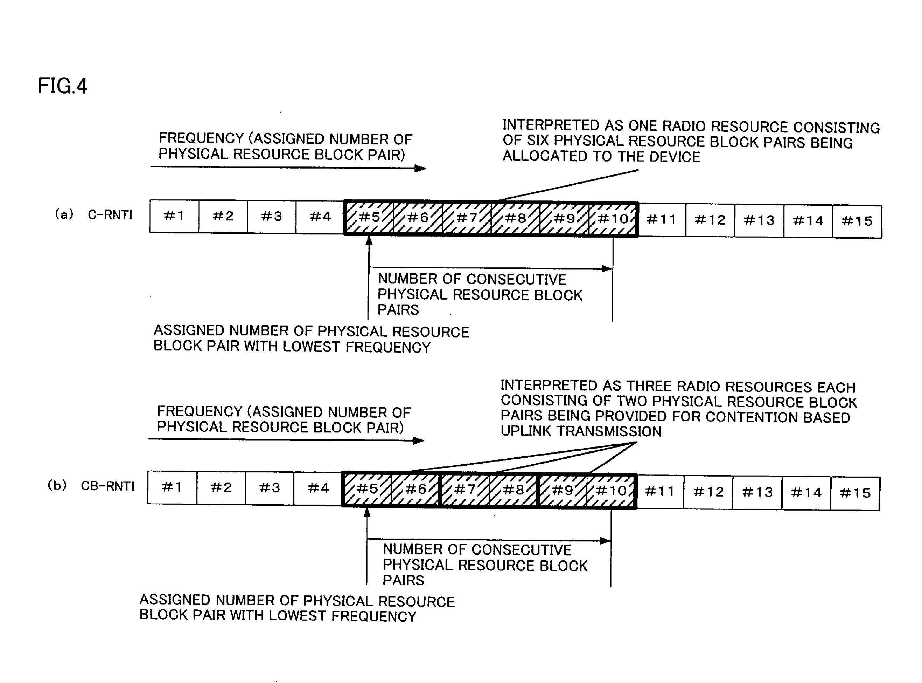

Fig. 4 is a schematic diagram illustrating an example of the way to allocate uplink radio resources according to the present invention. In Fig. 4, the horizontal axis represents the frequency domain and physical resource block pairs are numbered in the ascending order of frequency in the frequency domain. Information indicating radio resource allocation included in uplink grant (DCI format 0 and/or DCI format 0A) indicates the assigned number of the physical resource block pair of the lowest frequency among physical resource block pairs that are consecutive in the frequency domain, and the number of allocated physical resource block pairs that are consecutive in the ascending order of frequency from the above-identified physical resource block pair of the lowest frequency.

Fig. 4 (a) illustrates how radio resources are allocated by uplink grant including the C-RNTI (DCI format 0 and/or DCI format 0A). In Fig. 4 (a), the case is illustrated where the assigned number of the physical resource block pair with the lowest frequency is #5, and the number of consecutive physical resource block pairs is six, namely physical resource block pairs #5 to #10 are allocated. When mobile station device 1 receives the uplink grant including the C-RNTI, it determines that all physical resource block pairs (physical resource block pairs #5 to #10 enclosed by the bold line in Fig. 4 (a)) indicated by the uplink grant are allocated.

Fig. 4 (b) illustrates how radio resources are allocated by uplink grant including the CB-RNTI (DCI format 0 and/or DCI format 0A). In Fig. 4 (b), the case is illustrated where the assigned number of the physical resource block pair with the lowest frequency is #5, and the number of consecutive physical resource block pairs is six, namely physical resource block pairs #5 to #10 are allocated. When mobile station device 1 receives the uplink grant including the CB-RNTI, it determines that all physical resource block pairs (physical resource block pairs #5 to #10 enclosed by the bold line in Fig. 4 (b)) indicated by the uplink grant constitute, starting from the first pair, radio resources for contention based uplink transmission each being constituted of a predetermined number of physical resource block pairs.

In Fig. 4 (b), the radio resources for contention based uplink transmission are each constituted of two physical resource block pairs, starting from the first one (lowest frequency) of all physical resource block pairs indicated by the uplink grant. Specifically, three radio resources for contention based uplink transmission (each enclosed by the bold line in Fig. 4 (b)) are made up of physical resource block pairs 5# and 6#, physical resource block pairs #7 and #8, and physical resource block pairs #9 and #10, respectively. Thus, in the case where the uplink grant includes the CB-RNTI, mobile station device 1 may only have to modify interpretation of the information included in the uplink grant for indicating the radio resource allocation, relative to the interpretation of the uplink grant including the C-RNTI, to thereby identify the radio resource allocation for contention based uplink transmission. Accordingly, the present invention can be applied without using a new DCI format made up of new control information fields, and therefore, the complexity in configuration of mobile station device 1 can be kept low.

In Fig. 4, one radio resource for contention based uplink transmission consists of two physical resource block pairs. Alternatively, the radio resource for contention based uplink transmission may consist of one or three or more physical resource block pairs. As to the number of physical resource block pairs forming a radio resource for contention based uplink transmission, an agreement may not be made in advance between base station device 3 and mobile station device 1. Specifically, information indicating the number of physical resource block pairs forming a radio resource for contention based uplink transmission may be included in the uplink grant or a radio resource control signal for a specific mobile station device 1 and mobile station device 1 may be informed of this. The radio resource control signal is data information mapped to the PDSCH, and includes information about setting of the radio resource such as a parameter concerning transmission power of the PUSCH and a radio resource for the scheduling request. In Fig. 4, the information included in the uplink grant for indicating the radio resource allocation directly indicates the physical resource block pairs. Alternatively, initially the radio resource allocation included in the uplink grant may indicate allocation of a virtual response block (VRB) and then the virtual resource block may be associated with a physical resource block in accordance with a predetermined rule.

In the case where DCI format 0 and/or DCI format 0A indicates two or more radio resources (clusters) each consisting of physical resource block pairs that are consecutive in the frequency domain, mobile station device 1 may interpret each cluster as being one radio resource for contention based uplink transmission. In the case where information included in DCI format 0 and/or DCI format 0A for indicating radio resource allocation provides a plurality of clusters, the information indicating the radio resource allocation provides, for each cluster, the physical resource block pair of the lowest frequency and the number of physical resource block pairs starting from the lowest-frequency physical resource block pair and being consecutive in the ascending order of frequency. In DCI format 0 and/or DCI format 0A, the plurality of clusters indicating the radio resource allocation may be consecutive or non-consecutive in the frequency domain, and the number of clusters may be three or more.

In the case where base station device 3 includes the CB-RNTI in DCI format 0B, the number of bits of information included in DCI format 0B for indicating the radio resource allocation may be different from or the same as the number of bits of information included in DCI format 0 and/or DCI format 0A for indicating the radio resource allocation. The radio resource allocation method provided by information included in DCI format 0B for indicating radio resource allocation and the radio resource allocation method provided by information included in DCI format 0 and/or DCI format 0A for indicating radio resource allocation may be different from or identical to each other.

For example, a method that groups all physical resource block pairs in the system frequency band into physical resource block groups each consisting of a predetermined number of physical resource block pairs and allocates radio resources on the basis of the physical resource block group may be employed as a radio resource allocation method used in DCI format 0B. The physical resource block group consists of a predetermined number of physical resource block pairs starting from the physical resource block pair of the lowest frequency. Information included in DCI format 0B for indicating radio resource allocation includes a bit map in which each bit indicates whether or not a radio resource of each physical resource block group can be allocated.

### <As to Contention Based Uplink Transmission>

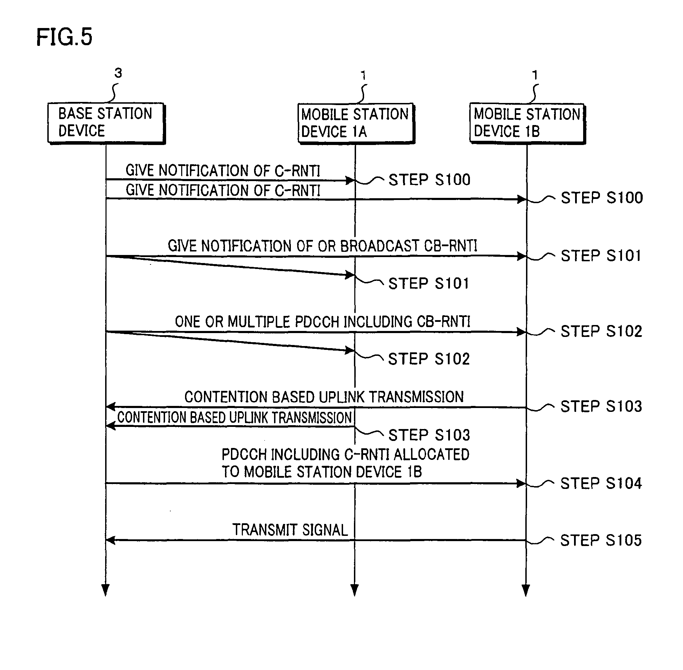

Fig. 5 is a sequence chart illustrating an example of contention based uplink transmission according to the present invention. Base station device 3 allocates different C-RNTIs to mobile station devices 1 respectively and notifies mobile station devices 1 of respective allocated C-RNTIs (step S100). Base station device 3 also determines a CB-RNTI code common to mobile station devices 1, and notifies mobile station device 1 that is to perform contention based uplink transmission of the CB-RNTI (step S101). An agreement about the CB-RNTI code may be made in advance between base station device 3 and mobile station device 1 to skip step S101.

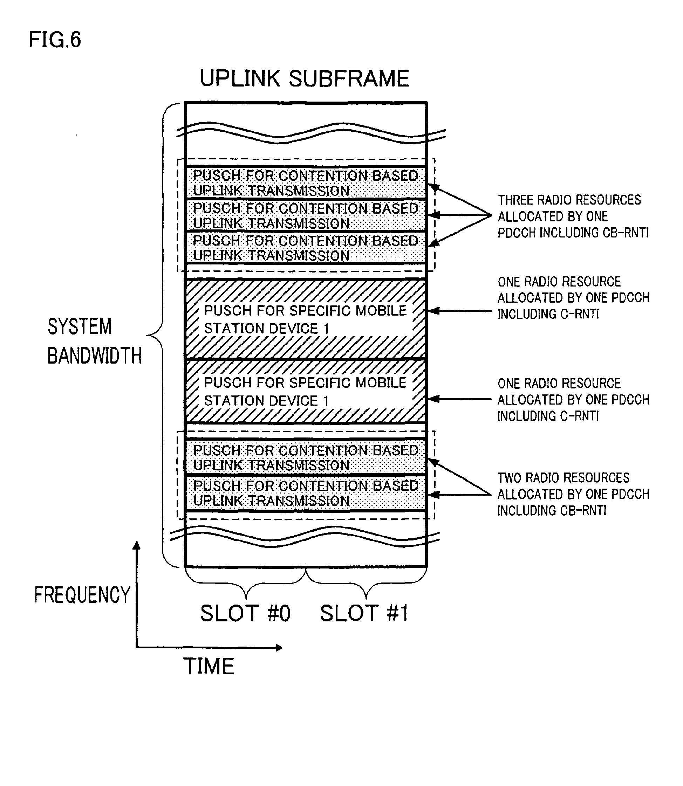

Base station device 3 allocates a radio resource for contention based uplink transmission, maps information indicating the allocation of the radio resource as well as the PDCCH including the CB-RNTI to the common search space or the mobile-station-device-specific search space for a given mobile station device 1, and transmits them to mobile station device 1 (step S102). In the case where mobile station device 1 has successfully detected one or a plurality of PDCCHs including the CB-RNTI, mobile station device 1 selects one radio resource from a plurality of radio resources indicated by the detected PDCCH(s) including the CB-RNTI and performs contention based uplink transmission (step S103). In step S103, mobile station device 1 can include the C-RNTI in the PUSCH and transmit this PUSCH, and base station device 3 can determine from the C-RNTI included in the PUSCH which mobile station device 1 has performed contention based uplink transmission. Regarding how to allocate the radio resource by base station device 3 and how to select the radio resource by mobile station device 1 will be described in detail in connection with Fig. 6.

Base station device 3 allocates a radio resource to a specific mobile station device 1, maps information indicating the allocation of the radio resource and the PDCCH including the C-RNTI to the common search space or the mobile-station-device-specific search space for the mobile station device 1 to which the C-RNTI is allocated, and transmits them to mobile station device 1 (step S104). In the case where mobile station device 1 has successfully detected the PDCCH including the C-RNTI allocated to the mobile station device, it selects all radio resources indicated by the detected PDCCH including the C-RNTI, and transmits the PUSCH (step S105).

Fig. 6 is a diagram illustrating an example of radio resource allocation for contention based uplink transmission according to the present invention. In Fig. 6, the horizontal axis represents the time domain and the vertical axis represents the frequency domain, and only one uplink subframe is shown. As shown in Fig. 6, in the uplink subframe, PUSCH radio resources (the region hatched with oblique lines in Fig. 6) for specific mobile station devices 1 that are allocated by the PDCCH including the C-RNTI, and PUSCH radio resources (the region hatched with dots in Fig. 6) for contention based uplink transmission that are common to a plurality of mobile station devices 1 and allocated by the PDCCH including the CB-RNTI are frequency-multiplexed.

In the case where mobile station device 1 detects the PDCCH including the C-RNTI allocated to the mobile station device itself, mobile station device 1 selects the PUSCH radio resource (the region hatched with oblique lines in Fig. 6) for this mobile station device that is allocated by the PDCCH including the C-RNTI, and transmits the PUSCH using the selected radio resource. In the case where mobile station device 1 detects one PDCCH including the CB-RNTI, mobile station device 1 selects one radio resource from a plurality of PUSCH radio resources (the regions hatched with dots in Fig. 6) for contention based uplink transmission indicated by the PDCCH including the CB-RNTI, and transmits the PUSCH using the selected radio resource. In the case where mobile station device 1 detects a plurality of PDCCHs including the CB-RNTI, mobile station device 1 selects one radio resource from the whole of a plurality of PUSCH radio resources for contention based uplink transmission (the regions hatched with dots in Fig. 6) that are indicated by the PDCCHs including the CB-RNTI each indicating a plurality of radio resources. Mobile station device 1 selects one radio resource at random from a plurality of radio resources.

Thus, one PDCCH including the CB-RNTI can indicate a plurality of PUSCH radio resources for contention based uplink transmission to thereby reduce the overhead of downlink control information, namely PDCCH, as compared with the case where one PDCCH indicates only one PUSCH radio resource. In addition, one radio resource can be selected from a plurality of radio resources for contention based uplink transmission that are indicated by one or a plurality of PDCCHs including the CB-RNTI detected by mobile station device 1, to thereby reduce, in the case where a plurality of mobile station devices 1 detect the same PDCCH including the CB-RNTI, the probability of collision between signals for contention based uplink transmission transmitted by a plurality of mobile station devices 1. In Fig. 6, a plurality of PUSCH radio resources for contention based uplink transmission that are indicated by one PDCCH including the CB-RNTI are all mapped to the same subframe. Alternatively, a plurality of PUSCH radio resources for contention based uplink transmission that are indicated by one PDCCH including the CB-RNTI may be mapped to different uplink subframes.

As to the way to select one radio resource from a plurality of radio resources, the one radio resource may not be selected at random but be selected in another way. For example, in the case where a large amount of uplink data remains untransmitted by mobile station device 1, one radio resource may be selected from a group of radio resources for contention based uplink transmission in which a large number of radio resources are included. For example, mobile station device 1 having a large amount of uplink data may select a radio resource from a group in which six physical resource block pairs form one radio resource for contention based uplink transmission, while mobile station device 1 having a smaller amount of uplink data may select a radio resource from a group in which two physical resource block pairs form one radio resource for contention based uplink transmission. By way of example, a group of radio resources for contention based uplink transmission means that the radio resources in the group are indicated by different uplink grants respectively. In addition, for different radio resources for contention based uplink transmission in a group, CB-RNTI of different codes may be used respectively.

### <As to Configuration of Base Station Device 3>

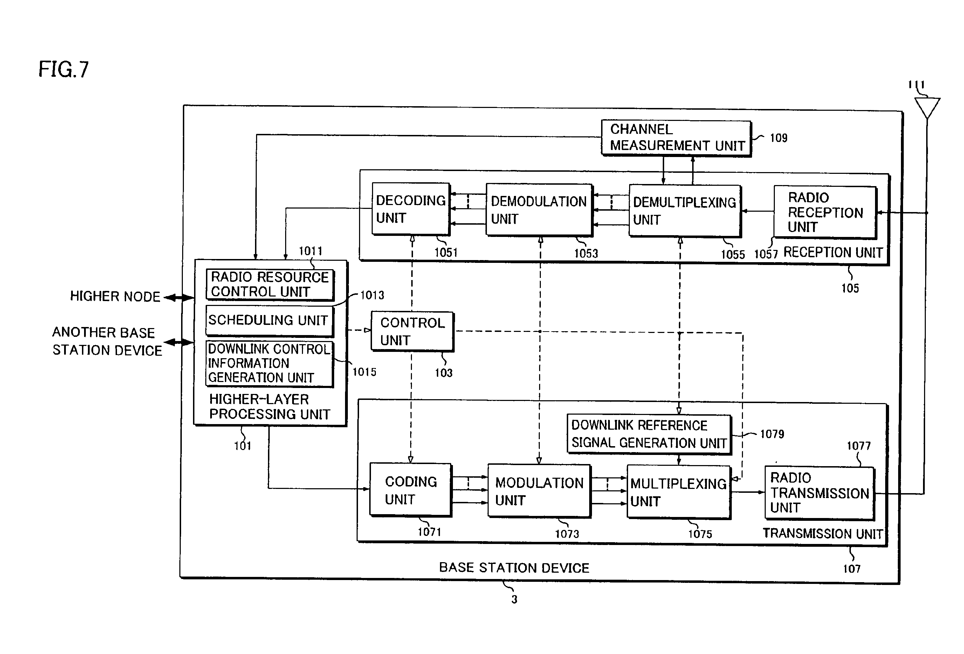

Fig. 7 is a schematic block diagram illustrating a configuration of base station device 3 according to the present invention. As shown, base station device 3 is configured to include a higher-layer processing unit 101, a control unit 103, a reception unit 105, a transmission unit 107, a channel measurement unit 109, and a transmission/reception antenna 111. Higher-layer processing unit 101 is configured to include a radio resource control unit 1011, a scheduling unit 1013, and a downlink control information generation unit 1015. Reception unit 105 is configured to include a decoding unit 1051, a demodulation unit 1053, a demultiplexing unit 1055, and a radio reception unit 1057. Transmission unit 107 is configured to include a coding unit 1071, a modulation unit 1073, a multiplexing unit 1075, a radio transmission unit 1077, and a downlink reference signal generation unit 1079.

Higher-layer processing unit 101 performs processing for a packet data convergence protocol (PDCP) layer, a radio link control (RLC) layer, and a radio resource control (RRC) layer. In higher-layer processing unit 101, scheduling unit 1013 for example generates control information based on results such as scheduling results, for controlling reception unit 105 and transmission unit 107, and outputs the control information to control unit 103. Radio resource control unit 1011 included in higher-layer processing unit 101 generates, or obtains from a higher node, information to be mapped to the downlink PDSCH, and outputs the information to transmission unit 107. Radio resource control unit 1011 also manages a variety of setting information for each mobile station device 1. For example, radio resource control unit 1011 performs management of the RNTI, including allocation of the C-RNTI to mobile station device 1 and allocation of a code to the CB-RNTI.

Scheduling unit 1013 included in higher-layer processing unit 101 performs scheduling such as radio resource allocation, coding scheme setting, and modulation scheme setting, based on uplink control information (ACK/NACK, channel quality information, scheduling request) of which it is notified through the PUCCH by mobile station device 1, the buffer status of which it is notified by mobile station device 1, and a variety of setting information for each mobile station device 1 that is set by radio resource control unit 1011. Scheduling unit 1013 allocates a radio resource to which the PUSCH is to be mapped by a specific mobile station device 1 and a radio resource to which the PUSCH is to be mapped for use in contention based uplink transmission by unspecified mobile station device 1, from among uplink radio resources. When scheduling unit 1013 is to allocate to a specific mobile station device 1 a radio resource to which the PUSCH is to be mapped, scheduling unit 1013 preferentially allocates a radio resource of high channel quality, based on the result of uplink channel measurement that is input by channel measurement unit 109. Then, scheduling unit 1013 allocates a radio resource for contention based uplink transmission, from among radio resources that have not been allocated to specific mobile station device 1.

Scheduling unit 1013 also determines a radio resource to which the PDSCH is to be mapped, from among downlink radio resources. Scheduling unit 1013 outputs control information to downlink control information generation unit 1015 so that it generates downlink control information indicating allocation of this radio resource. Scheduling unit 1013 further allocates one or a plurality of control channel elements to which the downlink control information generated by downlink control information generation unit 1015 is to be mapped that is/are included in the common search space or mobile-station-device-specific search space. Scheduling unit 1013 selects one or a plurality of control channel elements to which downlink control information including the C-RNTI is to be mapped, from the mobile-station-device-specific search space for mobile station device 1 to which the C-RNTI is allocated, and the common search space. Scheduling unit 1013 selects one or a plurality of control channel elements to which downlink control information including the CB-RNTI is to be mapped that is/are included in the common search space or a space where the common search space and mobile-station-device-specific search spaces for a plurality of mobile station devices 1 overlap. In the case where base station device 3 maps the CB-RNTI to the mobile-station-device-specific search space, respective mobile-station-device-specific search spaces for a plurality of mobile station devices 1 may not overlap each other.

Downlink control information generation unit 1015 included in higher-layer processing unit 101 generates downlink control information indicating allocation of uplink or downlink radio resource, based on the control information that is input from scheduling unit 1013. Downlink control information generation unit 1015 also generates a cyclic redundancy check code from the generated downlink control information, scrambles the generated cyclic redundancy check code with the RNTI, and attaches it to the downlink control information. In the case where the downlink control information indicates allocation of a radio resource to a specific mobile station device 1, downlink control information generation unit 1015 scrambles the cyclic redundancy check code with the C-RNTI allocated to this mobile station device 1. In the case where the downlink control information indicates radio resource allocation for contention based uplink transmission, downlink control information generation unit 1015 scrambles the cyclic redundancy check code with the CB-RNTI. Downlink control information generation unit 1015 generates the downlink control information including the C-RNTI and the downlink control information including the CB-RNTI in DCI formats with the same number of bits, or the same DCI formats.

Control unit 103 generates a control signal for controlling reception unit 105 and transmission unit 107, based on the control information from higher-layer processing unit 101. Control unit 103 outputs the generated control signal to reception unit 105 and transmission unit 107 and controls reception unit 105 and transmission unit 107.

In accordance with the control signal which is input from control unit 103, reception unit 105 demultiplexes, demodulates, and decodes a received signal which is received from mobile station device 1 through transmission/reception antenna 111, and outputs the decoded information to higher-layer processing unit 101. Radio reception unit 1057 converts (down-converts) an uplink signal received through transmission/reception antenna 111 into an intermediate frequency, removes unnecessary frequency components, controls the amplification level so that the signal level is appropriately kept, performs quadrature demodulation based on in-phase and quadrature components of the received signal, and converts the quadrature-demodulated analog signal into a digital signal. Radio reception unit 1057 removes, from the digital signal into which the analog signal is converted, a portion corresponding to a guard interval (GI). Radio reception unit 1057 performs fast Fourier transform (FFT) on the signal from which the guard interval is removed, extracts a signal of the frequency domain, and outputs it to demultiplexing unit 1055.

Demultiplexing unit 1055 demultiplexes the signal which is input from radio reception unit 1057 into signals such as PUCCH, PUSCH, and uplink reference signal. The signal is demultiplexed based on information about radio resource allocation which is determined in advance in base station device 3 by scheduling unit 1013 and of which each mobile station device 1 is notified. Demultiplexing unit 1055 also compensates for PUCCH and PUSCH propagation paths based on estimated values of the propagation paths that are input from channel measurement unit 109. Demultiplexing unit 1055 outputs the uplink reference signal obtained by demultiplexing, to channel measurement unit 109.

Demodulation unit 1053 performs inverse discrete Fourier transform (IDFT) on the PUSCH and obtains a modulation symbol. For the modulation symbol of PUCCH and PUSCH each, a modulation scheme is used which is determined in advance or of which each mobile station device 1 is notified in advance by base station device 3 by means of the downlink control information, such as binary phase shift keying (BPSK), quadrature phase shift keying (QPSK), 16 quadrature amplitude modulation (16QAM), or 64 quadrature amplitude modulation (64QAM), and accordingly demodulation unit 1053 demodulates the received signal.

Decoding unit 1051 decodes coded bits of the demodulated PUCCH and PUSCH based on a predetermined coding scheme at a code rate which is determined in advance or of which mobile station device 1 is informed in advance by base station device 3 through uplink grant, and outputs the decoded data information and the uplink control information to higher-layer processing unit 101. Channel measurement unit 109 measures, from the uplink reference signal which is input from demultiplexing unit 1055, the estimated values of the propagation paths and the channel quality for example, and outputs them to demultiplexing unit 1055 and higher-layer processing unit 101.

Transmission unit 107 generates a downlink reference signal in accordance with the control signal which is input from control unit 103, codes and modulates the data information and the downlink control information that are input from higher-layer processing unit 101, multiplexes the PDCCH, PDSCH, and downlink reference signal, and transmits the signal to mobile station device 1 through transmission/reception antenna 111.

Coding unit 1071 performs, on the downlink control information and the data information that are input from higher-layer processing unit 101, coding which is determined in advance or determined by scheduling unit 1013 such as turbo coding, convolutional coding, or block coding. Modulation unit 1073 modulates the coded bits that are input from coding unit 1071 in accordance with a modulation scheme which is determined in advance or determined by scheduling unit 1013, such as QPSK, 16QAM, or 64QAM. Downlink reference signal generation unit 1079 generates a sequence that has already been known by mobile station device 1, as a downlink reference signal that is determined in accordance with a predetermined rule based on a cell identifier (cell ID) for identifying base station device 3. Multiplexing unit 1075 multiplexes the modulated channels each and the generated downlink reference signal.

Radio transmission unit 1077 performs inverse fast Fourier transform (IFFT) on the multiplexed demodulated symbol to modulate it based on the OFDM scheme, adds a guard interval to the OFDM-modulated OFDM symbol, generates a baseband digital signal, converts the baseband digital signal into an analog signal, generates in-phase and quadrature components of an intermediate frequency from the analog signal, removes excess frequency components relative to the intermediate frequency band, converts (up-converts) the intermediate frequency signal into a high frequency signal, removes excess frequency components, amplifies the electric power, and outputs it to transmission/reception antenna 111 for transmitting it.

### <As to Configuration of Mobile Station Device 1>

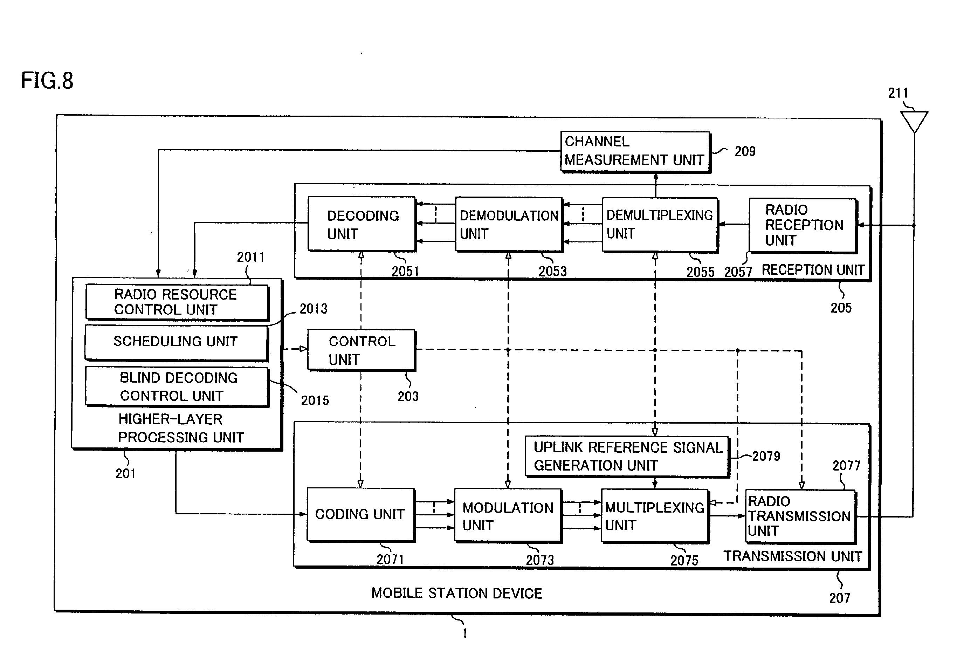

Fig. 8 is a schematic block diagram illustrating a configuration of mobile station device 1 according to the present embodiment. As shown, mobile station device 1 is configured to include a higher-layer processing unit 201, a control unit 203, a reception unit 205, a transmission unit 207, a channel measurement unit 209, and a transmission/reception antenna 211. Higher-layer processing unit 201 is configured to include a radio resource control unit 2011, a scheduling unit 2013, and a blind decoding control unit 2015. Reception unit 205 is configured to include a decoding unit 2051, a demodulation unit 2053, a demultiplexing unit 2055, and a radio reception unit 2057. Transmission unit 207 is configured to include a coding unit 2071, a modulation unit 2073, a multiplexing unit 2075, a radio transmission unit 2077, and an uplink reference signal generation unit 2079.

Higher-layer processing unit 201 outputs, to transmission unit 207, uplink data information generated for example by user operation. Higher-layer processing unit 201 also performs processing for a packet data convergence protocol layer, a radio link control layer, and a radio resource control layer. Higher-layer processing unit 201 generates control information for controlling reception unit 205 and transmission unit 207 based on downlink control information for example, and outputs the generated control information to control unit 203. Radio resource control unit 2011 included in higher-layer processing unit 201 manages a variety of setting information for the mobile station device itself. For example, radio resource control unit 2011 manages RNTI such as C-RNTI and CB-RNTI. Radio resource control unit 2011 also generates information to be mapped to each uplink channel and outputs the generated information to transmission unit 207.

Blind decoding control unit 2015 included in higher-layer processing unit 201 generates control information for controlling reception unit 205 so that the reception unit performs blind decoding on the downlink control information in the DCI format to be detected by mobile station device 1, in the common search space and/or the mobile-station-device-specific search space, and outputs the generated control information to control unit 203. Blind decoding control unit 2015 generates the control information for controlling reception unit 205 so that the reception unit performs blind decoding on the PDCCH including the C-RNTI in the common search space and the mobile-station-device-specific search space and performs blind decoding on the PDCCH including the CB-RNTI in the common search space or in the common search space and the mobile-station-device-specific search space, and outputs the generated control information to control unit 203. It should be noted that blind decoding control unit 2015 may generate the control information for controlling reception unit 205 so that reception unit 205 does not perform blind decoding on the PDCCH including the CB-RNTI in every case but performs blind decoding on the PDCCH including the CB-RNTI only in the case where a PUSCH radio resource dedicated to the mobile station device has not been allocated by base station device 3 while there is data information to be mapped to the PUSCH, and outputs the generated control information to control unit 203.

Scheduling unit 2013 included in higher-layer processing unit 201 generates control information for controlling reception unit 205 and transmission unit 207, based on the downlink control information of which the mobile station device is informed by base station device 3 through the PDCCH as well as a variety of setting information for the mobile station device that is set by the radio resource control signal of which the mobile station device is informed through the PDSCH and that is managed by radio resource control unit 2011, and outputs the generated control information to control unit 203. Scheduling unit 2013 generates the control information for controlling reception unit 205 so that it demultiplexes, demodulates, and decodes the PDSCH based on downlink assignment that is input from reception unit 205 and controlling transmission unit 207 so that it codes, modulates, and multiplexes the PUSCH based on uplink grant that is input from reception unit 205, and outputs the generated control information to control unit 203.

Scheduling unit 2013 generates the control information for controlling transmission unit 207 so that it selects the whole radio resources indicated by the uplink grant in the case where the uplink grant includes the C-RNTI allocated to the mobile station device itself, or randomly selects one radio resource from a plurality of radio resources indicated by the uplink grant in the case where the uplink grant includes the CB-RNTI, and multiplexes the PUSCH on the selected radio resource, and scheduling unit 2013 outputs the generated control information to control unit 203. Scheduling unit 2013 also generates the control information for controlling transmission unit 207 so that it selects one radio resource at random from the whole of a plurality of radio resources indicated by a plurality of uplink grants each indicating a plurality of radio resources and multiplexes the PUSCH on the selected radio resource, in the case where the plurality of uplink grants including the CB-RNTI have successfully been blind-decoded, and scheduling unit 2013 outputs the generated control information to control unit 203.

Control unit 203 generates a control signal for controlling reception unit 205 and transmission unit 207, based on the control information from higher-layer processing unit 201. Control unit 203 outputs the generated control signal to reception unit 205 and transmission unit 207 and controls reception unit 205 and transmission unit 207. In accordance with the control signal which is input from control unit 203, reception unit 205 demultiplexes, demodulates, and decodes a received signal which is received from base station device 3 through transmission/reception antenna 211, and outputs the decoded information to higher-layer processing unit 201.

Radio reception unit 2057 converts (down-converts) a downlink signal received through transmission/reception antenna 211 into an intermediate frequency, removes unnecessary frequency components, controls the amplification level so that the signal level is appropriately kept, performs quadrature demodulation based on in-phase and quadrature components of the received signal, and converts the quadrature-demodulated analog signal into a digital signal. Radio reception unit 2057 removes a portion corresponding to a guard interval from the digital signal into which the analog signal is converted, performs fast Fourier transform on the signal from which the guard interval is removed, and extracts a signal of the frequency domain.

Demultiplexing unit 2055 demultiplexes the extracted signal into PDCCH, PDSCH, and downlink reference signal. The signal is demultiplexed based on for example information about radio resource allocation of which the mobile station device is informed through the downlink control information. Demultiplexing unit 2055 also compensates for PDCCH and PDSCH propagation paths based on estimated values of the propagation paths that are input from channel measurement unit 209. Demultiplexing unit 2055 outputs the downlink reference signal obtained by demultiplexing, to channel measurement unit 209.

Demodulation unit 2053 performs demodulation on the PDCCH based on the QPSK modulation scheme, and outputs it to decoding unit 2051. Decoding unit 2051 tries to perform blind decoding on the PDCCH and, when decoding unit 2051 has successfully performed blind decoding, it outputs to higher-layer processing unit 201 the decoded downlink control information and the RNTI included in the downlink control information. Demodulation unit 2053 performs demodulation on the PDSCH based on a modulation scheme of which the mobile station device is informed through the downlink control information, such as QPSK, 16QAM, or 64QAM, and outputs it to decoding unit 2051. Decoding unit 2051 performs decoding on the code rate of which the mobile station device is informed through the downlink control information, and outputs the decoded data information to higher-layer processing unit 201.

Channel measurement unit 209 measures the downlink path loss from the downlink reference signal which is input from demultiplexing unit 2055, and outputs the measured path loss to higher-layer processing unit 201. Channel measurement unit 209 also calculates the estimated values of the downlink propagation paths from the downlink reference signal, and outputs them to demultiplexing unit 2055.

In accordance with the control signal which is input from control unit 203, transmission unit 207 generates the uplink reference signal, codes and modulates data information which is input from higher-layer processing unit 201, multiplexes the PUCCH, PUSCH, and the generated uplink reference signal, and outputs them to base station device 3 through transmission/reception antenna 211. Coding unit 2071 performs coding such as convolutional coding or block coding, on the uplink control information which is input from higher-layer processing unit 201, and performs turbo coding on the data information based on the code rate of which the mobile station device is informed through the downlink control information. Modulation unit 2073 modulates the coded bits that are input from coding unit 2071 based on a modulation scheme of which the mobile station device is informed through the downlink control information or determined in advance for each channel, such as BPSK, QPSK, 16QAM, or 64QAM.

Uplink reference signal generation unit 2079 generates a sequence that has already been known by base station device 3 that is determined in accordance with a predetermined rule based on a cell identifier for identifying base station device 3 and a bandwidth where the uplink reference signal is mapped, for example. Multiplexing unit 2075 rearranges PUSCH modulation symbols in parallel with each other in accordance with the control signal which is input from control unit 203, then performs discrete Fourier transform (DFT) and multiplexes the PUCCH and PUSCH signals and the generated uplink reference signal.

Radio transmission unit 2077 performs, on the multiplexed signal, inverse fast Fourier transform to modulate it based on the SC-FDMA scheme, adds a guard interval to the SC-FDMA-modulated SC-FDMA symbol, generates a baseband digital signal, converts the baseband digital signal into an analog signal, generates in-phase and quadrature components of an intermediate frequency from the analog signal, removes excess frequency components relative to the intermediate frequency, converts (up-converts) the intermediate frequency signal into a high frequency signal, removes excess frequency components, amplifies the electric power, and outputs it to transmission/reception antenna 211 for transmitting it.

### <As to Operation of Radio Communication System>

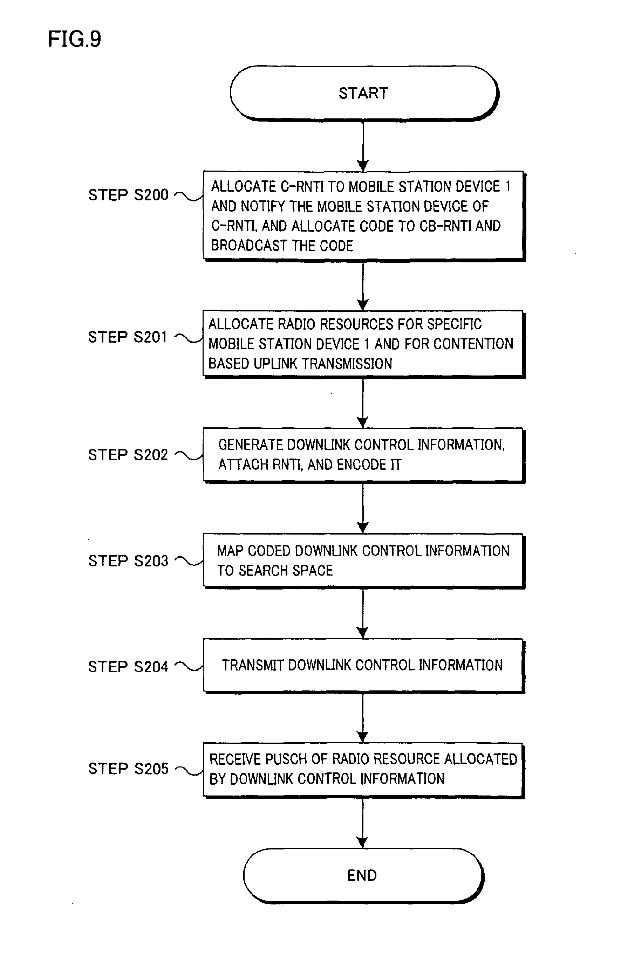

Fig. 9 is a flowchart illustrating an example operation of base station device 3 according to the present invention. Base station device 3 allocates the C-RNTI to each mobile station device 1, notifies each mobile station device 1 of the allocated C-RNTI, allocates a code to the CB-RNTI used for contention based uplink transmission, and broadcasts the allocated CB-RNTI code (step S200). Regarding the code for the CB-RNTI, an agreement may be made in advance between base station device 3 and mobile station device 1. Base station device 3 allocates, from among uplink radio resources, a radio resource to which a specific mobile station device 1 maps the PUSCH as well as a radio resource to which an unspecified mobile station device 1 maps the PUSCH for contention based uplink transmission (step S201).

Base station device 3 generates downlink control information indicating the uplink radio resource allocated in step S201. Base station device 3 also generates a cyclic redundancy check code from the generated downlink control information, scrambles the generated cyclic redundancy check code with the RNTI and attaches the scrambled code to the downlink control information, and codes the downlink control information. In the case where the downlink control information indicates allocation of a radio resource to a specific mobile station device 1, the cyclic redundancy check code is scrambled with the C-RNTI allocated to this mobile station device 1 and, in the case where the downlink control information indicates allocation of a radio resource for contention based uplink transmission to an unspecified mobile station device 1, the cyclic redundancy check code is scrambled with the CB-RNTI (step S202).

Base station device 3 maps the downlink control information coded in step S202 to the common search space or the mobile-station-device-specific search space (step S203). Base station device 3 selects one or a plurality of control channel elements to which the downlink control information including the C-RNTI is to be mapped, from the mobile-station-device-specific search space for mobile station device 1 to which the C-RNTI is allocated and the common search space, and selects one or a plurality of control channel elements to which the downlink control information including the CB-RNTI is to be mapped, from the common search space or a region where the common search space and respective mobile-station-device-specific search spaces for a plurality of mobile station devices 1 overlap. Base station device 3 transmits the downlink control information mapped to the common search space or the mobile-station-device-specific search space (step S204), and thereafter receives a signal transmitted by mobile station device 1 using the radio resource allocated by the downlink control information (step S205). After step S205, base station device 3 ends the process relevant to reception in the contention based uplink transmission.

Fig. 10 is a flowchart illustrating an example operation of mobile station device 1 according to the present invention. Mobile station device 1 obtains the C-RNTI and the CB-RNTI of which mobile station device 1 has been notified or which is broadcasted by base station device 3 (step S300), performs blind decoding on the downlink control information including the C-RNTI in the common search space and the mobile-station-device-specific search space, and performs blind decoding on the downlink control information including the CB-RNTI in the common search space or in the common search space and the mobile-station-device-specific search space (step S301). Mobile station device 1 may not perform blind decoding on the downlink control information including the CB-RNTI in every case, but perform blind decoding thereon only in the case where a specific condition is satisfied (for example, when a PUSCH radio resource has not been allocated by base station device 3 for a certain period of time while the mobile station device holds uplink data information).

In the case where mobile station device 1 has successfully performed blind decoding on the downlink control information including the C-RNTI (step S302), mobile station device 1 selects an uplink radio resource indicated by this downlink control information (step S303). In the case where mobile station device 1 has successfully performed blind decoding on the downlink control information including the CB-RNTI (step S303), mobile station device 1 selects one radio resource from a plurality of uplink radio resources indicated by this downlink control information (step S304). In the case where mobile station device 1 has successfully performed blind decoding on a plurality of pieces of downlink control information including the CB-RNTI, mobile station device 1 selects one radio resource from the whole of a plurality of uplink radio resources indicated by a plurality of pieces of downlink control information each indicating a plurality uplink radio resources. In the case where mobile station device 1 has successfully performed blind decoding on the downlink control information including the C-RNTI and the downlink control information including the CB-RNTI (step S303), mobile station device 1 selects an uplink radio resource indicated by the downlink control information including the C-RNTI (step S304). Mobile station device 1 maps the PUSCH to the uplink radio resource selected in step S303 or step S304, and transmits it to base station device 3 (step S305). After step S305, mobile station device 1 ends the process relevant to transmission in contention based uplink transmission.

Thus, in accordance with the present invention, base station device 3 allocates a plurality of radio resources for contention based uplink transmission by means of a piece of downlink control information, and mobile station device 1 selects one radio resource for contention based uplink transmission from the plurality of radio resources for contention based uplink transmission. In this way, many radio resources for contention based uplink transmission can be allocated while the overhead of the downlink control information is reduced, and therefore, contention based uplink transmission can be performed efficiently since, for example, the probability of collision between respective contention based uplink transmissions by mobile station devices 1 can be reduced.

### Modification

In the following, a modification of the present invention will be described.

According to the modification of the present invention, base station device 3 indicates, using a piece of downlink control information, a radio resource for a specific mobile station device 1 in one subframe or a radio resource for contention based uplink transmission in one subframe, and also indicates, using a piece of downlink control information, a plurality of radio resources for a specific mobile station device 1 that are allocated to a plurality of subframes, or using a piece of downlink control information, radio resources for contention based uplink transmission that are allocated to a plurality of subframes. In the modification of the present invention, the downlink control information includes information indicating radio resource allocation in one subframe and information indicating the subframe to which the radio resource allocation is applied.

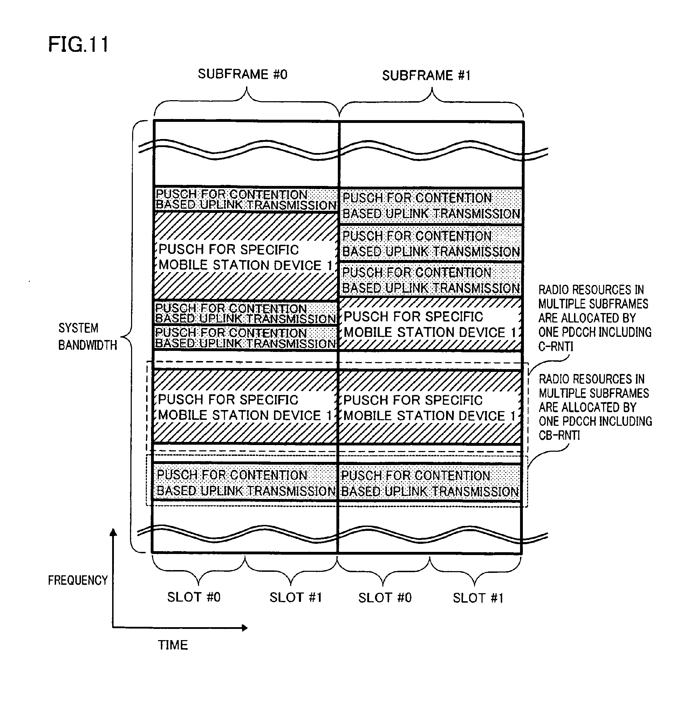

Fig. 11 is a diagram illustrating an example of radio resource allocation for contention based uplink transmission according to the modification of the present invention. In Fig. 11, the horizontal axis represents the time domain and the vertical axis represents the frequency domain, and only two uplink subframes are shown. In Fig. 11, each region hatched with oblique lines represents a radio resource for a specific mobile station device 1 and each region hatched with dots represents a radio resource for contention based uplink transmission. In Fig. 11, the region enclosed by the broken line represents radio resources in subframe #0 and subframe #1 that are allocated to a specific mobile station device 1 and indicated by a piece of downlink control information including the C-RNTI, and the region enclosed by the dotted line represents radio resources in subframe #0 and subframe #1 that are allocated for contention based uplink transmission and indicated by a piece of downlink control information including the CB-RNTI.

For example, in Fig. 11, in the case where 2-bit information indicating a subframe to which radio resource allocation included in the downlink control information is applied is "10," the radio resource allocation indicated by the downlink control information is applied to subframe #0. In the case where the 2-bit information indicating a subframe is "01," the radio resource allocation indicated by the downlink control information is applied to subframe #1. In the case where the 2-bit information indicating a subframe is "11," the radio resource allocation indicated by the downlink control information is applied to subframe #0 and subframe #1.

In the case where radio resources in multiple subframes are allocated by means of a piece of downlink control information including the C-RNTI as indicated by the region enclosed by the broken line in Fig. 11, mobile station device 1 selects all the radio resources indicated by the downlink control information and transmits the PUSCH including different pieces of data information in respective subframes (namely respective radio resources). In the case where radio resources in multiple subframes are allocated by means of a piece of downlink control information including the CB-RNTI as indicated by the region enclosed by the dotted line in Fig. 11, mobile station device 1 selects one radio resource from the radio resources in the multiple subframes indicated by the downlink control information including the CB-RNTI and transmits the PUSCH by the selected radio resource.

While Fig. 11 illustrates that a piece of downlink control information allocates only one radio resource per subframe, a piece of downlink control information may allocate a plurality of radio resources per subframe. Moreover, when mobile station device 1 receives the downlink control information including the CB-RNTI, mobile station device 1 may not apply the information which is included in the downlink control information for indicating a subframe to which the radio resource allocation is applied, but apply information, which is included in the downlink control information for indicating radio resource allocation in one subframe, to only the subframe of which the mobile station device 1 is informed in advance by base station device 3 or to only the subframe after a predetermined time.

Thus, in accordance with the modification of the present invention, the present invention is applicable as well to the case where a piece of downlink control information indicates a plurality of radio resources mapped to a plurality of subframes. The present invention and the modification of the present invention have been described in connection with the radio communication system based on the frequency division duplex (FDD) scheme in which a downlink radio resource and an uplink radio resource consist of respective frequency bands different from each other. The present invention and the modification of the present invention, however, are also applicable to a radio communication system based on the time division duplex (TDD) scheme in which an uplink subframe (uplink radio resource) and a downlink subframe (downlink radio resource) are switched to each other depending on the time so that the downlink radio resource and the uplink radio resource share the same frequency band.

The above-described characteristic means of the present invention may also be implemented by being mounted on an integrated circuit and controlled. Specifically, the integrated circuit of the present invention is an integrated circuit applied to a radio communication system including base station device 3 and mobile station device 1 transmitting a signal to base station device 3 based on downlink control information received from base station device 3, and characterized in that base station device 3 includes means for transmitting, on the PDCCH, uplink grant (downlink control information) indicating a plurality of radio resources for contention based signal transmission (for contention based uplink transmission), and means for receiving a signal from an unspecified mobile station device 1 by means of said radio resources each.

The integrated circuit of the present invention may also be an integrated circuit applied to a radio communication system including base station device 3 and mobile station device 1 transmitting a signal to base station device 3 based on downlink control information received from base station device 3, and characterized in that mobile station device 1 includes means for receiving, on the PDCCH, downlink control information transmitted by base station device 3 for indicating a plurality of radio resources for contention based signal transmission, means for selecting one radio resource from said plurality of radio resources indicated by said downlink control information, and means for transmitting a contention based signal using said selected radio resource.

Thus, in the radio communication system for which the integrated circuit of the present invention is used, base station device 3 uses a piece of downlink control information to allocate a plurality of radio resources for contention based uplink transmission, and mobile station device 1 selects one radio resource for contention based uplink transmission from a plurality of radio resources for contention based uplink transmission. In this way, many radio resources for contention based uplink transmission can be allocated while the overhead of the downlink control information is reduced, and therefore, contention based uplink transmission can be performed efficiently since, for example, the probability of collision between respective contention based uplink transmissions by mobile station devices 1 can be reduced.

A program running on base station device 3 and mobile station device 1 involved in the present invention may be a program controlling a CPU (Central Processing Unit) or the like (a program causing a computer to function) so that the functions of the above-described embodiment involved in the present invention are implemented. Information handled by these devices is temporarily stored in a RAM (Random Access Memory) when processed, thereafter stored in any of a variety of ROMs such as flash ROM (Read Only Memory) or HDD (Hard Disk Drive), and read, modified and written by the CPU as required.

Mobile station device 1 and base station device 3 in the above-described embodiment may partially be implemented by a computer. In this case, a program for implementing the control function may be recorded on a computer-readable recording medium, and the program recorded on this recording medium may be read and executed by a computer system so as to implement it. "Computer system" herein refers to a computer system integrated in mobile station device 1 or base station device 3 and includes OS and hardware such as peripherals.

"Computer-readable recording medium" refers to portable media such as flexible disk, magneto-optical disk, ROM, and CD-ROM, as well as storage devices such as hard disk integrated in a computer system. Moreover, "computer-readable recording medium" may also include those dynamically holding a program for a short period of time, like communication lines used in the case where a program is transmitted through a network such as Internet or a communication line such as telephone line, and those holding the program for a certain period of time, like a volatile memory in a server or a computer system functioning as a client in the aforementioned case. The program above may also be used for implementing a part of the above-described functions, or may be the one that enables the above-described functions to be implemented in combination with a program having already been recorded in the computer system.

Mobile station device 1 and base station device 3 in the embodiment described above may partially or wholly be implemented typically in the form of an LSI which is an integrated circuit. The functional blocks of mobile station device 1 and base station device 3 may individually be configured in the form of a chip, or may partially or wholly be integrated into a chip. The integrated circuit may be implemented not only in the form of an LSI but a dedicated circuit or general-purpose processor. If the advance in semiconductor technology provides any technology for implementing an integrated circuit that replaces the LSI, an integrated circuit provided by this technology may also be used.

Namely, the functions of mobile station device 1 may be implemented by an integrated circuit or a plurality of circuits. The functions of base station device 3 may also be implemented by an integrated circuit or a plurality of circuits.

### <Additional Notes>

A radio communication system includes a base station device 3 and a mobile station device 1 transmitting a signal to said base station device based on control information received from said base station device. Said base station device transmits, as control information (downlink control information), first control information indicating a plurality of radio resources for contention based signal transmission, on a control channel. Said mobile station device receives said first control information on said control channel, selects one radio resource from said plurality of radio resources indicated by said first control information, and transmits a contention based signal using said selected radio resource.

Said base station device includes, in said first control information indicating a plurality of radio resources for contention based signal transmission, a first identifier which is common to different mobile station devices, and includes, in second control information as said control information (downlink control information) for indicating one or more radio resources for signal transmission that is/are allocated to a specific mobile station device, a second identifier allocated to the specific mobile station device. Said mobile station device determines whether the control information is said first control information or said second control information based on whether said control information includes said first identifier or said second identifier, and changes the way to select a radio resource for signal transmission, based on the result of the determination.

In the case where said control information includes the first identifier, said mobile station device determines that the control information is said first control information, selects one radio resource from said plurality of radio resources for signal transmission that are indicated by said control information and, in the case where said control information includes the second identifier, determines that the control information is said second control information and selects all said radio resources for signal transmission that are indicated by said control information.

While one embodiment of the present invention has been described in detail with reference to the drawings, specific features are not limited to the above-described ones and various design changes and the like may be made within the scope without going beyond the substance of the invention.

### REFERENCE SIGNS LIST

1 (1A, 1B, 1C) mobile station device; 3 base station device; 101 higher-layer processing unit; 103 control unit; 105 reception unit; 107 transmission unit; 109 channel measurement unit; 201 higher-layer processing unit; 203 control unit; 205 reception unit; 207 transmission unit; 209 channel measurement unit; 1013 scheduling unit; 1015 downlink control information generation unit; 2013 scheduling unit; 2015 blind decoding control unit

## Claims

1. A radio communication system comprising a base station device (3) and a mobile station device (1) transmitting a signal to said base station device based on control information received from said base station device, wherein
said base station device transmits, on a control channel, control information indicating a plurality of radio resources for contention based signal transmission, and
said mobile station device
receives said control information on said control channel,
selects one radio resource from said plurality of radio resources indicated by said control information, and
transmits a contention based signal using said selected radio resource.

2. The radio communication system according to claim 1, wherein
when said mobile station device detects a plurality of pieces of said control information in the same time frame, said mobile station device selects one radio resource from the whole of a plurality of radio resources indicated by a plurality of pieces of said control information each indicating a plurality of radio resources.

3. The radio communication system according to claim 1, wherein said mobile station device randomly selects said one radio resource.

4. The radio communication system according to claim 1, wherein
said base station device
includes, in control information indicating a plurality of radio resources for contention based signal transmission, a first identifier common to different mobile station devices, and
includes, in control information indicating one or more radio resources for signal transmission assigned to a specific mobile station device, a second identifier allocated to the specific mobile station device, and
said mobile station device changes a way to select said radio resource for signal transmission depending on whether said control information includes said first identifier or said second identifier.

5. The radio communication system according to claim 4, wherein
when said control information includes the first identifier, said mobile station device selects one radio resource from said plurality of radio resources for contention based signal transmission that are indicated by said control information, and
when said control information includes the second identifier, said mobile station device selects all said plurality of radio resources for signal transmission that are indicated by said control information.

6. The radio communication system according to claim 4, wherein
a radio resource for signal transmission indicated by said control information is indicated by an assigned number of a physical resource block pair of a lowest frequency among physical resource block pairs that are consecutive in a frequency domain and the number of the physical resource block pairs that are consecutive in ascending order of frequency from said physical resource block pair of the lowest frequency,
when said control information includes the first identifier, said mobile station device determines that radio resources for signal transmission are each constituted of a specific number of consecutive physical resource block pairs, beginning from a physical resource block pair of a lowest frequency among a plurality of physical resource block pairs indicated by said control information, and selects one radio resource from said radio resources for signal transmission, and
when said control information includes the second identifier, said mobile station device determines that a whole of a plurality of physical resource block pairs indicated by said control information constitute one radio resource for signal transmission, and selects said radio resource for signal transmission.

7. A base station device (3) receiving a signal transmitted from a mobile station device (1) based on control information transmitted from said base station device, the base station device comprising:
a transmission unit (107) transmitting, on a control channel, control information indicating a plurality of radio resources for contention based signal transmission; and
a reception unit (105) receiving a signal from an unspecified said mobile station device using said radio resources each.

8. A mobile station device (1) transmitting a signal to a base station device (3) based on control information transmitted from said base station device, said mobile station device comprising:
a reception unit (205) receiving, on a control channel, control information indicating a plurality of radio resources for contention based signal transmission that is transmitted from said base station device;
a scheduling unit (2013) selecting one radio resource from said plurality of radio resources indicated by said control information; and
a transmission unit (207) transmitting a contention based signal using said selected radio resource.

9. A radio communication method applied to a base station device (3) receiving a signal transmitted from a mobile station device (1) based on control information transmitted from said base station device (3), comprising the steps of:
transmitting, on a control channel, control information indicating a plurality of radio resources for contention based signal transmission; and
receiving a signal from an unspecified said mobile station device using said radio resources each.

10. A radio communication method applied to a mobile station device (1) transmitting a signal to a base station device (3) based on control information transmitted from said base station device, comprising the steps of:
receiving, on a control channel, control information indicating a plurality of radio resources for contention based signal transmission that is transmitted from said base station device;
selecting one radio resource from said plurality of radio resources indicated by said control information; and
transmitting a contention based signal using said selected radio resource.

11. A circuit device in a base station device (3) receiving a signal transmitted from a mobile station device (1) based on control information transmitted from said base station device, said circuit device comprising:
a transmission circuit transmitting, on a control channel, control information indicating a plurality of radio resources for contention based signal transmission; and
a reception circuit receiving a signal from an unspecified said mobile station device using said radio resources each.

12. The circuit device according to claim 11, wherein said circuit device is an integrated circuit into which said transmission circuit and said reception circuit are integrated.

13. A circuit device in a mobile station device (1) transmitting a signal to a base station device (3) based on control information transmitted from said base station device, said circuit device comprising:
a reception circuit receiving, on a control channel, control information indicating a plurality of radio resources for contention based signal transmission that is transmitted from said base station device;
a selection circuit selecting one radio resource from said plurality of radio resources indicated by said control information; and
a transmission circuit transmitting a contention based signal using said selected radio resource.

14. The circuit device according to claim 13, wherein said circuit device is an integrated circuit into which said reception circuit, said selection circuit, and said transmission circuit are integrated.
